# EUROPÄISCHE PATENTSCHRIFT

(11) **EP 1 001 845 B1**
(45) Veröffentlichungstag und Bekanntmachung des Hinweises auf die Patenterteilung: **14.05.2003**
(21) Anmeldenummer: 98946283.3
(22) Anmeldetag: 06.08.1998
(51) Int. Cl.: B01L 3/00, B01L 3/14

(54) **SYSTEM ZUM ZURVERFÜGUNGSTELLEN BIOLOGISCHER MATERIALIEN**
SYSTEM FOR PROVIDING BIOLOGICAL MATERIALS
SYSTEME DE MISE A DISPOSITION DE BIOMATERIAUX

(30) Priorität: 07.08.1997 DE 19734135
(43) Veröffentlichungstag der Anmeldung: 24.05.2000
(73) Patentinhaber: Roche Diagnostics GmbH, 68305 Mannheim (DE)
(72) Erfinder: BIENHAUS, Gerhard, D-82407 Wielenbach (DE); FRITZ, Michael, D-68647 Biblis (DE); SCHWAB, Jürgen, D-68775 Ketsch (DE); WALTER, Thomas, D-83673 Bichl (DE)
(86) Internationale Anmeldenummer: EP9804906
(87) Internationale Veröffentlichungsnummer: WO99007471

(56) Entgegenhaltungen:
- WO-A-93/01739
- WO-A-97/11155
- DE-A- 4 124 778
- DE-A- 19 605 814
- US-A- 5 219 528
- US-A- 5 398 837
- US-A- 5 417 923
- US-A- 5 603 899

## Beschreibung

Die vorliegende Erfindung betrifft ein System, das es dem Benutzer ermöglicht, biologische Proben aufzuarbeiten, indem die Probe mit einer Matrix in Kontakt gebracht wird, an die sich die gewünschten biologischen Materialien binden und die biologischen Materialien nachfolgend aus der Matrix eluiert werden. Diese Art der Gewinnung biologischer Materialien wird insbesondere im Bereich der Analytik von Zellen oder Nukleinsäuren eingesetzt, wo relativ geringe Mengen biologischer Materialien benötigt werden.

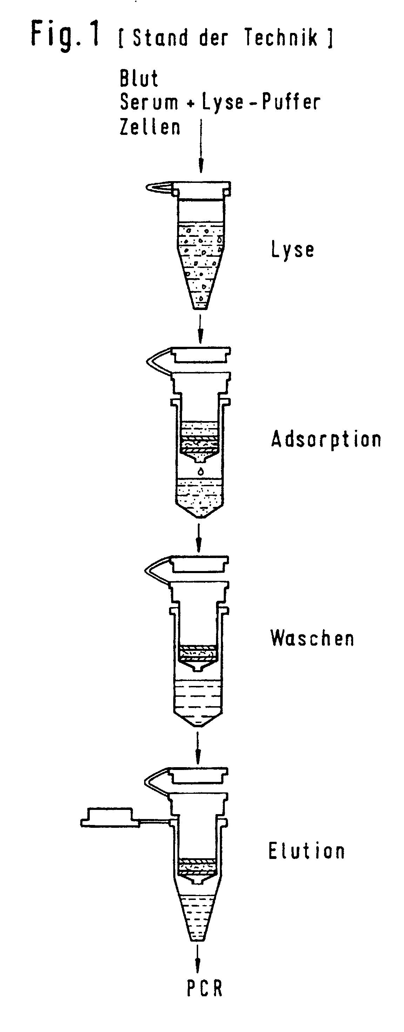

Im Stand der Technik sind bereits Vorrichtungen bekannt, die mit Matrices zur Bindung und zur Reinigung von Nukleinsäuren arbeiten. In der EP-A-0 738 733 wird beispielsweise ein Gefäß beschrieben, in das eine flüssige Probe gegeben werden kann und das an seiner Unterseite eine poröse Matrix besitzt, an die Nukleinsäuren gebunden werden, indem die Probe durch die Matrix hindurchgezogen wird. Weiterhin ist in der DE-4143394 eine Vorrichtung beschrieben, die eine Vielzahl von nebeneinander angeordneten Gefäßen besitzt, die in ihrem Bodenbereich eine Schicht aus selektiv adsorbierenden Material aufweisen und bei denen sich an der Unterseite der Gefäße eine Auslaßöffnung befindet. Die beschriebene Anordnung von Gefäßen wird auf eine Einheit aus Probenaufnahmegefäßen aufgesetzt, so daß Flüssigkeiten aus den erstgenannten Gefäßen nach dem Durchtritt durch die Schicht aus adsorbierendem Material in die Auffanggefäße gelangt. Weiterhin ist von der Firma Quiagen der sogenannte QUIamp-Kit bekannt, dessen Funktionsweise in der Figur 1 dargestellt ist. Zunächst wird eine Probenflüssigkeit zusammen mit einem Lysepuffer in ein verschließbares Gefäß gegeben und ein Aufschluß der Mischung durchgeführt. Im nachfolgenden Schritt wird das Lysegemisch in ein Gefäß mit einer spezifisch-bindefähigen Matrix gegeben und durch Zentrifugation durch die Matrix hindurchgezogen, wobei die austretende Flüssigkeit in einem Gefäß aufgefangen wird. Die Matrix wird nachfolgend gewaschen und schließlich das adsorbierte biologische Material eluiert.

Der Stand der Technik besitzt den Nachteil, daß der Benutzer, der in der Regel mit einer großen Zahl von verschiedenen Proben konfrontiert ist, wenig bei der Automatisierung seiner Verfahrensabläufe unterstützt wird. Bei Verwendung des in Figur 1 dargestellten Systems des Standes der Technik werden jeweils einzelne Gefäße zur Bearbeitung der Probe verwendet, so daß bei paralleler Bearbeitung mehrerer Proben stets einzelne Gefäße vorliegen, die leicht miteinander verwechselt werden können. Die Kennzeichnung eines jeden Gefäßes hingegen ist für den Bearbeiter mit einigem Aufwand verbunden, so daß sie häufig unterbleibt. Insbesondere bei der Bearbeitung von Nukleinsäuren, bei der es häufig um die Erkennung von Krankheiten oder um kriminalistische Sachverhalte geht, ist eine Verwechselung von Proben mit fatalen Konsequenzen verbunden.

Im Stand der Technik ist weiterhin kein Konzept bekannt, das den Benutzer bei einer großen Anzahl von Proben geeignet unterstützt, so daß entweder eine manuelle Bearbeitung beschleunigt erfolgen kann oder eine Automatisierbarkeit der Bearbeitung gegeben wäre.

Eine Aufgabe der vorliegenden Erfindung war es daher, ein System zum Zurverfügungstellen biologischer Materialien vorzuschlagen. mit dem eine koordinierte, einfache, verwechselungssichere und kontaminationssichere Bearbeitung einer Mehrzahl von Probenmaterialien möglich ist. Weiterhin war es Aufgabe der vorliegenden Erfindung ein System und ein Verfahren zur Verfügung zu stellen, mit dem eine Verwechselung von Proben hinreichend ausgeschlossen werden kann. In einem weiteren Aspekt widmet sich die vorliegende Erfindung dem Problem, ein Verschlußkonzept zur Verfügung zu stellen, das den spezifischen Anforderungen bei einer Zurverfügungstellung von biologischen Materialien Rechnung trägt.

Die vorstehend genannten Aufgaben werden gelöst durch ein Verfahren zur Gewinnung eines gereinigten biologischen Materials mit den folgenden Schritten:
a) Einbringen von biologischen Materialien in voneinander getrennte Aufschlußgefäße einer Aufschlußeinheit, die zwei oder mehr Aufschlußgefäße in einer vorgegebenen geometrischen Anordnung beinhaltet,
b) Zugabe von Aufschlußflüssigkeiten zu den biologischen Materialien in die Aufschlußgefäße,
c) Transfer der in den Aufschlußgefäßen befindlichen Flüssigkeiten in eine Matrixeinheit mit einer der Zahl der Aufschlußgefäße entsprechenden Zahl von Matrixgefäßen mit Auslaßöffnungen, die in einer vorgegebenen geometrischen Anordnung angeordnet sind, wobei sich in jedem der Matrixgefäße eine Matrix befindet, an die das zu reinigende biologische Material bindet,
d) Entziehen der in den Matrixgefäßen befindlichen Flüssigkeiten durch die Auslaßöffnungen, wobei die Matrices von den Flüssigkeiten durchströmt werden,
e) Aufsetzen der Matrixeinheit auf eine Auffangeinheit mit Auffanggefäßen, die so angeordnet sind, daß zumindest die Auslaßöffnungen der Matrixgefäße in die Auffanggefäße hineinragen,
f) Füllen der Matrixgefäße mit Elutionsfluid,
g) Entziehen der Elutionsfluide aus den Matrixgefäßen durch deren Auslaßöffnungen, wobei die Matrices von den Elutionsfluiden durchströmt werden und die mit biologischem Material angereicherten Elutionsfluide in den Auffanggefäßen aufgefangen werden.

Das vorstehend genannte Verfahren zur Gewinnung gereinigter biologischer Materialien besitzt gegenüber dem Stand der Technik den Vorteil, daß sowohl durch die Aufschlußeinheit, die Matrixeinheit und die Auffangeinheit mit ihren vorgegebenen geometrischen Anordnungen eine Systematisierung der Abarbeitungsvorgänge ermöglicht wird. Durch die vorgegebene geometrische Anordnung der Aufschlußgefäße, die vorzugsweise der geometrischen Anordnung der Matrixgefäße in der Matrixeinheit entspricht, wird es dem Benutzer erleichtert, ein aufgeschlossenes biologisches Material aus einem Aufschlußgefäß in das hierzu korrespondierende Matrixgefäß zu geben. Weiterhin korrespondiert die Anordnung von Matrixgefäßen und von Auffanggefäßen derart, daß zumindest die Auslaßöffnungen der Matrixgefäße in die Auffanggefäße hineinragen, wenn die Matrixeinheit auf die Auffangeinheit aufgesetzt ist.

Die Zusammenordnung von Aufschlußgefäßen, Matrixgefäßen und Auffanggefäßen zu den entsprechenden Einheiten bietet weiterhin den Vorteil, daß keine einzelnen Gefäße gehandhabt werden müssen, sondern das ganze Einheiten bewegt werden können, die von ihrer Größe und Formgebung wesentlich einfacher handhabbar sind.

Bei dem genannten Verfahren können weiterhin vorteilhaft Codierungen auf den einzelnen Einheiten eingesetzt werden, die eine eindeutige Zuordnung einer in ein Aufschlußgefäß gegebenen Probe zu einem letztendlich aufgefangenen Eluat ermöglichen.

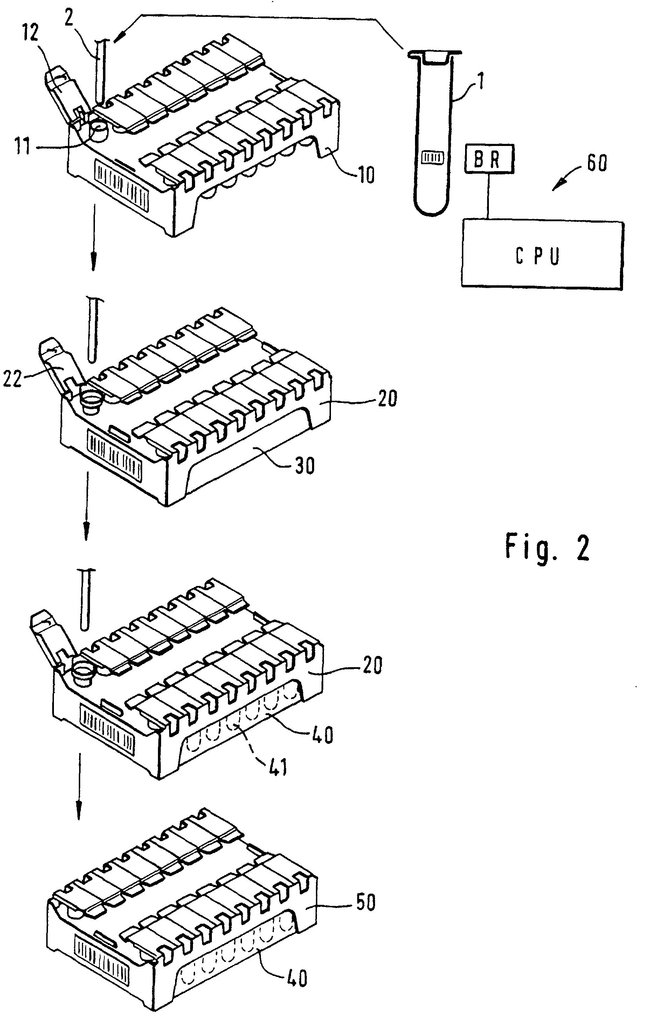

Das vorstehend genannte Verfahren wird anhand der Figur 2 näher erläutert.

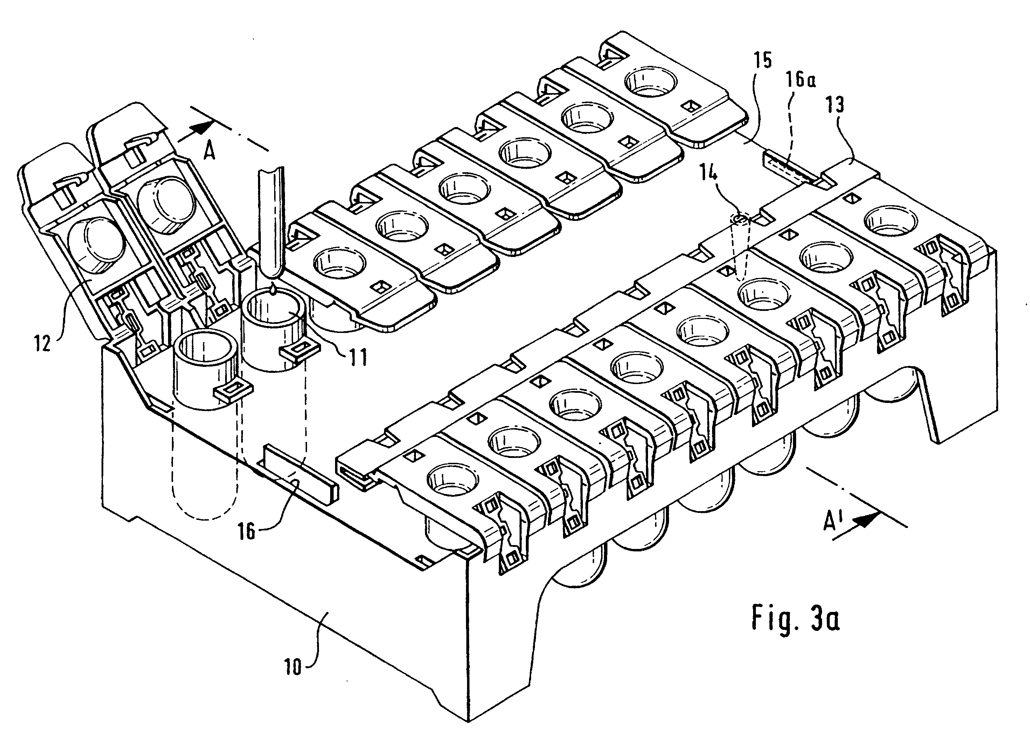

In Figur 2 ist eine Probe (1) dargestellt, die mit einer Pipette (2) oder dergleichen in ein Aufschlußgefäß (11) der Aufschlußeinheit (10) gegeben wird. In das selbe Aufschlußgefäß (11) wird weiterhin eine Aufschlußflüssigkeit gegeben. Die weiteren Aufschlußgefäße der Aufschlußeinheit (10) können mit anderen Probeflüssigkeiten und mit der gleichen oder anderen Aufschlußflüssigkeiten gefüllt werden. Die Aufschlußeinheit (10) besitzt eine der Zahl von Aufschlußgefäßen entsprechende Zahl von Verschlüssen (12), mit denen die Aufschlußgefäße verschlossen werden. Vorzugsweise ist bei den Pipettierschritten nur jeweils das Aufschlußgefäß geöffnet, in das Flüssigkeit gegeben wird, so daß eine Kontamination der übrigen Aufschlußgefäße, beispielsweise durch herabfallende Tropfen, ausgeschlossen werden kann. Der Aufbau der Aufschlußeinheit wird später anhand der Figuren 3A und 3B näher erläutert. An dieser Stelle sei lediglich auf die Probe und die Reagenzien sowie die Verfahrensschritte näher eingegangen.

Probematerialien, die mit der vorliegenden Erfindung bearbeitet werden können, sind beispielsweise Flüssigkeiten wie Blut, Speichel und dergleichen, es können jedoch auch Proben im festen Zustand, wie z. B. Gewebestücke oder dergleichen, verwendet werden.

Aufschlußflüssigkeiten, die auch als Lyseflüssigkeiten bezeichnet werden, sind im Stand der Technik bekannt, in der Regel sind dies alkalische Lösungen von Alkylsulphaten oder anderen zellwandschädigenden Verbindungen. Bei der Lyse werden Zellwände von in der Probe enthaltenen Zellen zerstört, so daß die Zellinhaltsstoffe, insbesondere Nukleinsäuren, freigesetzt werden. Hierzu wird das Gemisch aus Probe und Aufschlußflüssigkeit in der Regel bei erhöhter Temperatur, beispielsweise 70 °C, für eine Zeit von einigen Minuten inkubiert. Das erhaltene Gemisch wird im Folgenden als Aufschlußmischung bezeichnet.

In der Figur 2 ist weiterhin eine Kombination aus einer Matrixeinheit (20) mit einer Abfalleinheit (30) dargestellt. Nach dem Aufschluß der Probe in der Aufschlußeinheit (10) wird Aufschlußmischung aus einem Aufschlußgefäß in ein Matrixgefäß (21) der Matrixeinheit (20) pipettiert. Das Umpipettieren aus der Aufschlußeinheit in die Matrixeinheit erfolgt vorzugsweise so, daß die Pipettierung zwischen korrespondierenden Gefäßen stattfindet, d. h. aus dem Gefäß 1 der Aufschlußeinheit wird eine Pipettierung in Gefäß 1 der Matrixeinheit vorgenommen. Hierzu sind Aufschluß- und Matrixeinheit vorzugsweise mit Zahlen, Buchstaben oder dergleichen versehen, die eine Zuordnung korrespondierender Gefäße ermöglichen. Auch der vorstehend genannte Pipettierschritt erfolgt vorzugsweise so, daß nur der Deckel (22) geöffnet ist, der dem Gefäß zugeordnet ist, in das hineinpipettiert wird. Auf diese Weise wird auch hier eine Kontamination der übrigen Matrixeinheiten vermieden. Unterhalb der Matrixeinheit befindet sich die Abfalleinheit (30) mit Kavitäten, in denen aus den Matrixgefäßen austretende Flüssigkeiten aufgefangen werden. Die Matrixeinheit (20) ist auf die Abfalleinheit (30) so aufgesetzt, daß jedes der Matrixgefäße in eine korrespondierende Kavität der Abfalleinheit hineinragt. Auf diese Weise kann vermieden werden, daß sich aus verschiedenen Matrixgefäßen austretende Flüssigkeiten miteinander vermischen. Dies wäre tolerierbar, wenn durch eine ausreichende Bautiefe und entsprechende Verfahrensführung sichergestellt werden kann, daß die Matrixgefäße nicht mit dem Flüssigkeitsgemisch in Berührung kommen und die Matrix mit fremden Probematerialien kontaminiert wird. Um jedoch die Bautiefe klein zu halten und eine Kontamination der Matrixgefäße zu vermeiden, wird jedem der Matrixgefäße vorzugsweise eine eigene Kavität zur Verfügung gestellt. Weiterhin ist es vorteilhaft, die Kavitäten mit einem saugfähigen Material, beispielsweise einem Vlies auszulegen, das Abfallflüssigkeiten aufsaugt, so daß beim Transport keine Flüssigkeitsbewegung eintritt, die zu einer Kontamination der Matrix führt.

Aus den Matrixgefäßen kann das hinzugegebene Aufschlußgemisch beispielsweise durch Anlegen eines Unterdruckes an die Kavitäten der Abfalleinheit oder durch Anlegen eines Überdruckes an die Zugabeöffnungen der Matrixgefäße erfolgen. Das in der Figur 2 dargestellte System ist jedoch so gestaltet, daß das Aufschlußgemisch auf einfache Weise durch Zentrifugation aus den Matrixgefäßen entfernt werden kann. Hierzu wird die mit Aufschlußflüssigkeiten befüllte Anordnung aus Matrixeinheit und Abfalleinheit in eine Zentrifuge gestellt und die Fluide durch die Zentrifugalkraft durch die Matrices hindurchbewegt. Vorzugsweise ist die Anordnung von ihrer Größe her so beschaffen, daß sie in für Mikrotiterplatten geeigneten Zentrifugen verwendet werden kann. Beim Hindurchtreten der Flüssigkeiten durch die Matrices der Matrixgefäße adsorbieren sich die zu reinigenden biologischen Materialien an den Matrices. Im Stand der Technik ist es hinlänglich bekannt, welche Typen von Matrices für die verschiedenen zu adsorbierenden Materialien verwendet werden können. Für Nukleinsäuren können beispielsweise Glasfaservliese verwendet werden. Bezüglich weiterer Details betreffend Matrixgefäße und die darin verwendeten Matrices wird auf die EP-A-0 738 733 verwiesen. Die Bindung der zu isolierenden biologischen Materialien an die Matrix ist in erster Linie adsorbtiv, d. h. sie beruht auf einer physikalischen Bindung. Erfindungsgemäß sollen jedoch auch solche Bindungsvorgänge mit umfaßt werden, bei denen eine ionische oder kovalente Bindung zwischen den zu isolierenden biologischen Materialien und dem Matrixmaterial erfolgt.

Nach dem Hindurchzentrifugieren der Aufschlußflüssigkeit durch die Matrices können die Matrices durch Hinzugabe von Waschflüssigkeit (beispielsweise destilliertes Wasser) und erneute Zentrifugation gewaschen werden. Derartige Waschvorgänge können nach Bedarf mehrmals wiederholt werden. Hierzu braucht das System aus Matrixeinheit und Abfalleinheit nicht aus der Zentrifuge entnommen zu werden, es kann vielmehr eine Zugabe von Waschflüssigkeit direkt in die Matrixgefäße erfolgen, während die Zentrifuge steht.

Nachdem die Aufschlußflüssigkeiten und gegebenenfalls anschließend Waschflüssigkeiten aus den Matrixgefäßen entfernt wurden, wird die Matrixeinheit (20) von der Abfalleinheit (30) heruntergenommen und auf eine Auffangeinheit (40) aufgesetzt. Die Auffangeinheit (40) besitzt eine der Zahl der Matrixgefäße entsprechende Zahl von Auffanggefäßen (41). Matrixeinheit und Auffangeinheit sind derart gestaltet, daß die Matrixgefäße zumindest mit ihrer Austrittsöffnung in die Auffanggefäße hineinragen, wenn die Matrixeinheit auf die Auffangeinheit aufgesetzt ist. Zur Ablösung der zu isolierenden biologischen Substanzen werden Elutionsfluide in die Matrixgefäße gegeben und durch die Matrices hindurch in die Auffanggefäße gedrückt, was vorzugsweise durch Zentrifugation der Anordnung aus Matrixeinheit und Auffangeinheit erfolgt. Für die Elution geeignete Elutionsfluide werden entsprechend den zu eluierenden Materialien und dem Matrixmaterial angepaßt. Elutionsfluide sind im Stand der Technik hinlänglich bekannt, beispielsweise wird auf die EP-A-738 733 verwiesen.

Nach der Elution liegen in den Auffanggefäßen der Auffangeinheit (40) gereinigte biologische Materialien vor, die für weitere Schritte, wie z. B. die Polymerase Kettenreaktion, verwendet werden können. Bei einer besonders vorteilhaften Ausgestaltung des erfindungsgemäßen Verfahrens wird die Matrixeinheit (20) nach der Elution von der Auffangeinheit (40) abgenommen und die Verschlußeinheit (50) auf die Auffangeinheit (40) aufgesetzt. Die Verschlußeineheit (50) hat eine der Zahl der Auffangbehälter entsprechende Zahl von Anschlußröhren, die sich beim Aufsetzen der Verschlußeinheit flüssigkeitsdicht an die Auffangbehälter anschließen. Die Anschlußröhren sind an ihrer Oberseite durch Deckel verschlossen. Auf diese Weise ist es möglich, die mit offenen Gefäßen versehene Auffangeinheit in einem Handhabungsschritt vollständig zu verschließen. Ein besonderer Vorteil dieser Art des Verschlusses ist es, daß die einzelnen Auffanggefäße einzeln geöffnet werden können, so daß Kontaminationen bei sorgfältiger Arbeitsweise vollständig vermeidbar sind.

In der Figur 2 ist weiterhin eine Koordinationseinheit (60) mit einem Strichcodeleser (BR) und einer Rechen- und Speichereinheit (CPU) dargestellt. Ein Verfahren zur Gewinnung gereinigter biologischer Materialien kann gemäß der vorliegenden Erfindung vorteilhaft erfolgen, indem zunächst die Daten einer Probe gespeichert werden. Dies kann beispielsweise durch Ablesung eines auf der Probe befindlichen Strichcodes oder auch durch manuelle Eingabe von Daten in die Speicher- und Recheneinheit erfolgen. An der Aufschlußeinheit ist bei einem derartigen Verfahren eine Codierung angebracht, durch die die gesamte Einheit gekennzeichnet ist. Beim Hineingeben von Probe in ein Aufschlußgefäß der Aufschlußeinheit wird in die Rechen- und Speichereinheit der Platz der Probe innerhalb der Aufschlußeinheit sowie die Codierung der Aufschlußeinheit eingegeben. Letzteres kann beispielsweise durch Ablesung der Codierung mittels des Strichcodelesers (BR) erfolgen. Beim Transfer von Aufschlußflüssigkeit aus der Aufschlußeinheit (10) in die Matrixeinheit (20) wird mittels der Koordinierungseinheit registriert, von welcher Aufschlußeinheit in welche Matrixeinheit der Transfer erfolgt. Hierzu wird innerhalb der Codierungseinheit der Codierung der Aufschlußeinheit die Codierung der Matrixeinheit zugeordnet. Weiterhin wird der Transfer von Fluid koordiniert vorgenommen, d. h. aus einem Gefäß der Aufschlußeinheit (10) wird Flüssigkeit in das entsprechende Gefäß der Matrixeinheit überführt. Die korrespondierenden Gelaße in Aufschluß- und Matrixeinheit sind für den Benutzer aufgrund der Position des Gefäßes innerhalb der Einheit erkennbar. Vorzugsweise werden die Einheiten außerdem mit Zahlen. Buchstaben, Farben oder dergleichen versehen, die für den Benutzer korrespondierende Gefäße erkennen lassen.

Auf der Auffangeinheit (40) kann sich ebenfalls eine Codierung befinden, die der Codierung der Matrixeinheit zugeordnet wird. Vorzugsweise wird jedoch eine Codierung auf der Verschlußeinheit verwendet, um den Verbleib der Proben mitzuverfolgen.

Durch die einzelnen Zuordnungsschritte ist über die Codierung der Auffangeinheit bzw. die Codierung der Verschlußeinheit (50) und die Position innerhalb der Auffangeinheit eine eindeutige Zuordnung eines Elutionsfluids zu der Probe, aus der es eluiert wurde, möglich. Das beschriebene Codierungskonzept, das auf einer gleichbleibenden geometrischen Anordnung der Gefäße in den einzelnen Einheiten, den Codierungen der einzelnen Einheiten sowie einem koordinierten Transfer der Flüssigkeiten beruht, ermöglicht somit eine einfache und sichere Zuordnung der Elutionsfluide zu den ursprünglichen Proben. Mit dem beschriebenen Konzept wird mit einem geringen Aufwand für den Benutzer ein hoher Grad an Verwechselungssicherheit erzielt. Unter einer geometrischen Anordnung wird im Rahmen der vorliegenden Erfindung eine Anordnung verstanden, bei der mehrere Gefäß einer Einheit in einem regelmäßigen Abstand zueinander angeordnet sind. Insbesondere sollen hierunter lineare Anordnungen oder Anordnungen der Gefäße in Rechteckform verstanden werden. Derartige Anordnungen ermöglichen dem Benutzer ein systematisches Abarbeiten und stellen somit eine schnelle und sichere Bedienbarkeit sicher.

Das Verfahren der vorliegenden Erfindung kann weiterhin vorteilhaft mit Klappdeckeln an der Aufschlußeinheit, Matrixeinheit und/oder Verschlußeinheit durchgeführt werden, die die folgenden drei Positionen einnehmen können:
- Eine geöffnete Position, in der eine Zugabe und Entnahme von Flüssigkeit erfolgt,
- eine Position, bei der der Deckel herabgeklappt ist und an der Öffnung des darunterliegenden Gefäßes anliegt,
- einer geschlossenen Position, bei der das dem Deckel zugehörige Gefäß verschlossen ist, und aus der der Deckel nur unter Kraftaufwand oder nach Lösen eines Verschlusses in die geöffnete Stellung bewegt werden.

Mit derartigen Deckeln kann ein erfindungsgemäßes Verfahren durchgeführt werden, bei dem sich die Deckel vor Zugabe von Flüssigkeit in der angeklappten Position befinden, dann der jeweilige Deckel, in dessen zugehöriges Gefäß eine Zugabe erfolgen soll, geöffnet wird und der Deckel nach der Zugabe vollständig verschlossen wird. Bei dieser Vorgehensweise ist für den Benutzer durch den Unterschied zwischen angeklappten und vollständig geschlossenen Deckeln erkennbar, in welche Gefäße bereits eine Zugabe erfolgt ist und welche noch zur Bearbeitung anstehen.

Die vorliegende Erfindung betrifft weiterhin ein System zum Zurverfügungstellen biologischer Materialien mit
a) einer Auffangeinheit zum Auffangen des biologischen Materials mit zwei oder mehr Auffangbehältern, von denen jeder eine von oben zugängliche Öffnung besitzt,
b) einer Matrixeinheit mit einem Halter, in dem Matrixbehälter angeordnet sind, die eine Zugabeöffnung zur Zugabe eines Fluids sowie eine Auslaßöffnung zur Abgabe von Fluid haben und die Matrixbehälter so angeordnet sind, daß sie zumindest mit ihren Auslaßöffnungen in die Auffangbehälter hineinragen, wenn die Matrixeinheit auf die Auffangeinheit aufgesetzt ist,
c) einer Verschlußeinheit, die auf die Auffangeinheit aufgesetzt wird und die eine der Zahl der Auffangbehälter entsprechende Zahl von Anschlußröhren besitzt, die eine Anschlußöffnung sowie eine mit einem Deckel verschlossene Entnahmeöffnung aufweisen und die Anschlußröhren mit ihren Anschlußöffnungen flüssigkeitsdicht an die Auffangbehälter angeschlossen werden, wenn die Verschlußeinheit auf die Auffangeinheit aufgesetzt ist.

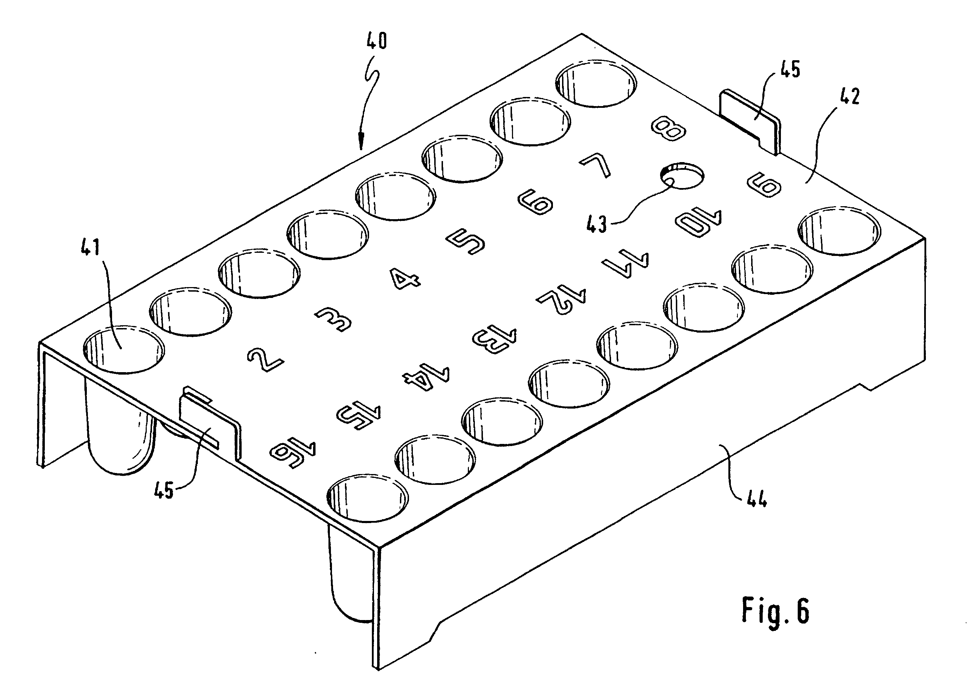

Das genannte System erleichtert dem Benutzer durch die Verwendung von Auffangeinheit, Matrixeinheit und Verschlußeinheit die durchzuführenden Operationen beim Zurverfügungstellen biologischer Materialien. Insbesondere unterscheidet sich das System vom Stand der Technik darin, daß eine separate Verschlußeinheit verwendet wird, die zum Verschluß der Auffanggefäße auf die Auffangeinheit aufgesetzt wird. Während der Stand der Technik (siehe z. B. Figur 1) Einzelgefäße verwendet, die vom Benutzer einzeln manipuliert werden müssen, erleichtert das vorstehend genannte System dem Benutzer die Arbeitsschritte durch Anordnungen, die mehrere gleichartige Bearbeitungsgefäße in einer vorgegebenen geometrischen Anordnung besitzen. Ein besonderer Vorteil des erfindungsgemäßen Systems ist es, daß die Auffangeinheit mit ihren geöffneten Auffanggefäßen in einem Handhabungsschritt verschlossen werden kann. Aus der Figur 6 wird deutlich, daß die erfindungsgemäße Auffangeinheit keine Deckel besitzt und somit ohne Probleme unter der Matrixeinheit (20) positioniert werden kann. Ein Zusammenfügen der in Figur 1 dargestellten Auffanggefäße zu einer Einheit aus mehreren Auffanggefäßen führt jedoch nicht zu der Auffangeinheit der vorliegenden Erfindung. Die Verwendung einer separaten Verschlußeinheit mit Anschlußröhren, die an Auffanggefäße angeschlossen werden, ist im Stand der Technik nicht beschrieben.

Zu dem erfindungsgemäßen System können weiterhin eine Aufschlußeinheit, eine Abfalleinheit und/oder eine Koordinierungseinheit gehören.

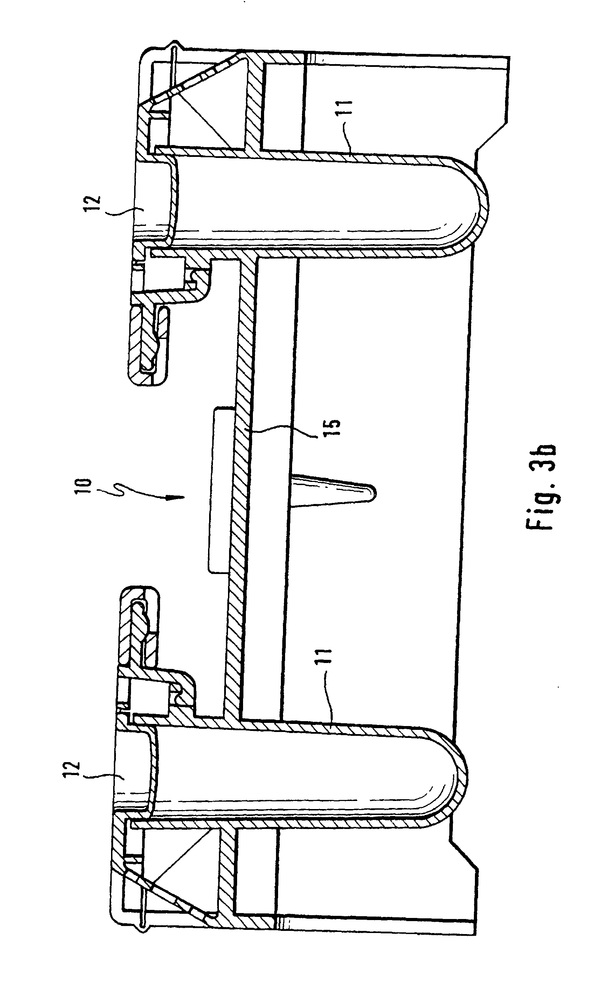

Die vorstehend genannten Einheiten des erfindungsgemäßen Systems werden anhand der Figuren 3 bis 9 näher beschrieben.

Die Figur 3a zeigt eine Aufschlußeinheit in perspektivischer Ansicht. Die dargestellte Aufschlußeinheit (10) besitzt zwei Reihen von je acht Aufschlußgefäßen (11), die durch Deckel (12) verschlossen sind. Die gesamte Aufschlußeinheit kann als ein zusammenhängendes Formteil im Spritzgußverfahren hergestellt werden. Geeignete Materialien für die Aufschlußeinheit sind daher z. B. Kunststoffe, die im Spritzgußprozeß verarbeitet werden können, wie beispielsweise Polyethylen und Polypropylen. Die Wandstärke der Aufschlußeinheit kann den erforderlichen Randbedingungen, wie ausreichende Steifigkeit und hinreichende Wärmeleitung, angepaßt werden. In der Praxis haben sich Wandstärken zwischen 0,5 und 1,5 mm bewährt.

Figur 3a zeigt weiterhin eine abnehmbare Schiene (13), die über die Enden der Deckel geschoben ist und die Deckel einer Reihe miteinander verbindet. Mit dieser Schiene können die verbundenen Deckel gleichzeitig geöffnet und geschlossen werden. Ohne die Schiene (13) können die Deckel (12) jedoch vollständig unabhängig voneinander betätigt werden, so daß eine voneinander unabhängige Bearbeitung der Aufschlußgefäße möglich ist. Insbesondere ist es von Vorteil, wenn bei der Zugabe von Flüssigkeiten oder der Entnahme von Flüssigkeit die übrigen Aufschlußgefäße durch die Deckel verschlossen sind. Vorteilhaft können Deckel (12) verwendet werden, die drei Positionen einnehmen. In einer ersten Position ist ein Deckel geöffnet, so daß eine Zugabe und Entnahme von Flüssigkeit aus dem Aufschlußgefäß erfolgen kann. In einer zweiten Position ist der Deckel auf das Aufschlußgefäß niedergeklappt, so daß keine Kontamination des Gefäßinhaltes durch Hereintropfen von Flüssigkeit oder dergleichen erfolgt. In einer dritten Position ist der Deckel vollständig geschlossen, wozu der Deckel entweder über eine Barriere hinwegbewegt oder durch einen Verschluß verschlossen wird.

Figur 3a zeigt weiterhin einen Dorn (14), der sich ausgehend von der Platte (15) nach unten erstreckt. Der Dorn ist auf einer Seite der Aufschlußeinheit angeordnet, so daß durch ihn eine Asymmetrie entsteht. Durch Zusammenwirken des Dornes (14) mit einer entsprechenden Ausnehmung in einer Halteeinheit oder dergleichen kann eine eindeutige Positionierung der Aufschlußeinheit relativ zu einer Halteeinheit oder dergleichen erreicht werden.

An den Seiten der Platte (15) befinden sich die Ausnehmungen (16, 16A), die ebenfalls zur Positionierung der Aufschlußeinheit verwendet werden können.

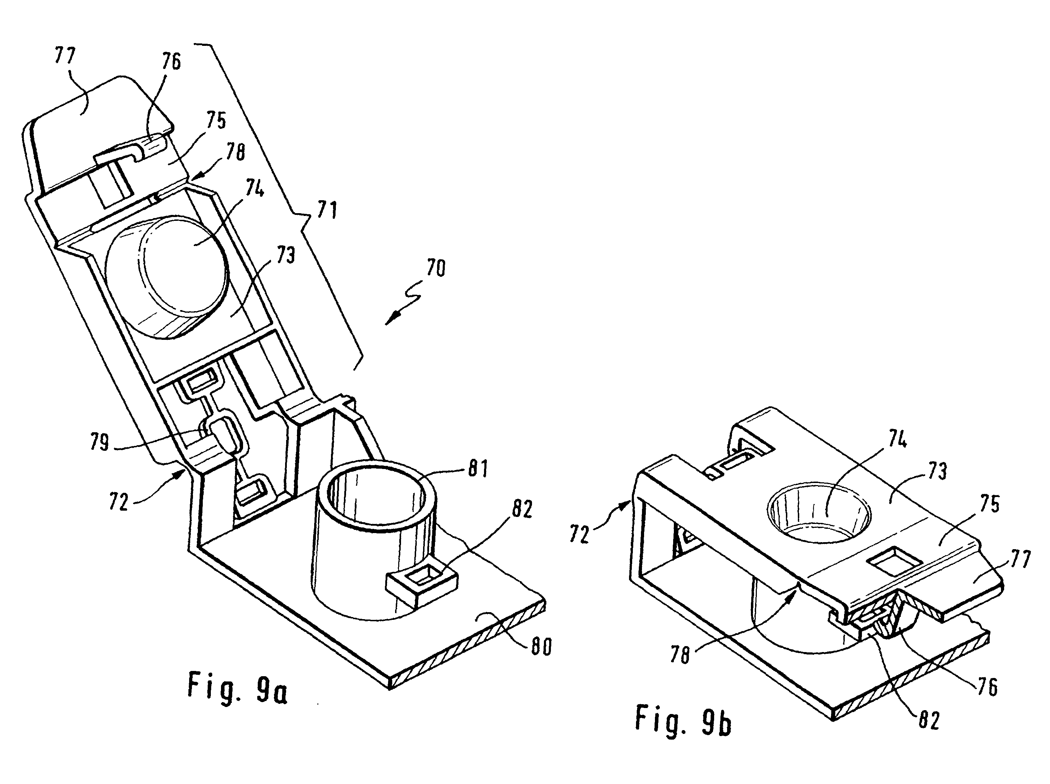

Figur 3b zeigt einen Querschnitt durch die Figur 3a entlang der Linie A-A'. In dieser Darstellung ist erkennbar, daß die Aufschlußgefäße (11) in die Platte (15) eingelassen sind, so daß sich ein Teil des Gefäßes unterhalb und ein anderer Teil oberhalb der Platte befindet. Die Aufschlußgefäße besitzen typischerweise ein Volumen von mehreren Millilitern. Das Volumen kann jedoch den Bedürfnissen angepaßt werden. Die Gefäße sind wie in der Figur 3b dargestellt, durch die Deckel (12) verschlossen. Eine genauere Beschreibung eines für die Zurverfügungstellung biologischer Materialien besonders geeigneten Deckelkonzeptes, wird im Zusammenhang mit der Figur 9 gegeben.

In der Figur 3b ist weiterhin dargestellt, daß sich an die Platte (15) Standelemente (16) anschließen, die vorzugsweise so bemessen sind, daß sie bis unterhalb der Gefäßböden herabreichen. Mit den Standelementen ist ein Aufstellen der Aufschlußeinheit auf eine ebene Fläche möglich.

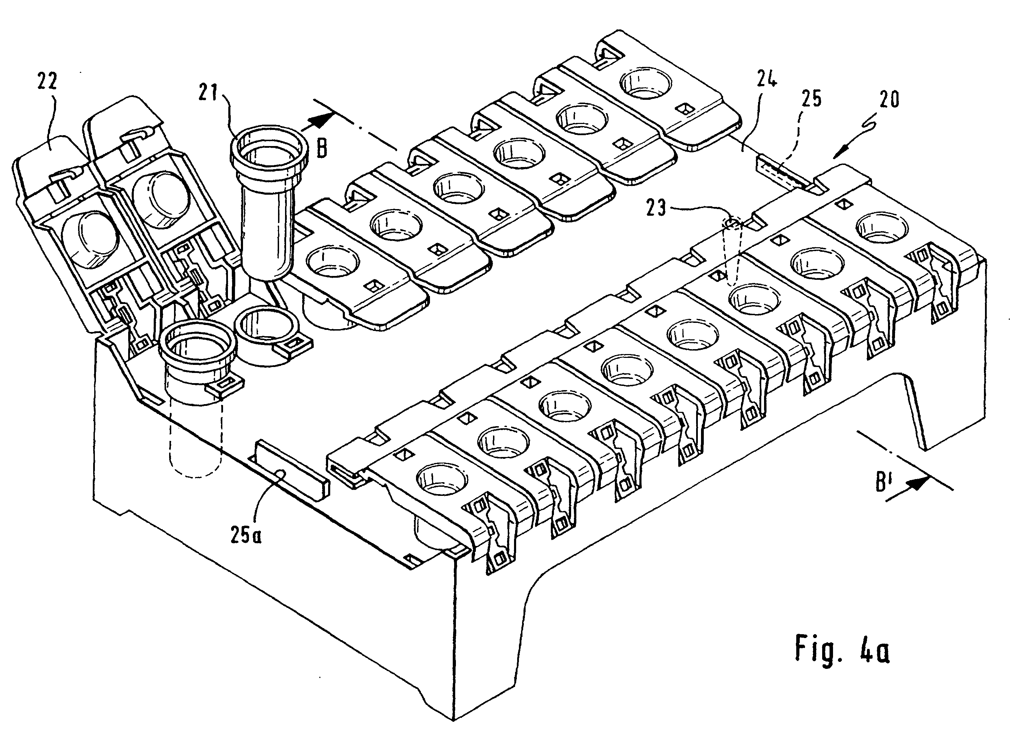

In der Figur 4a ist eine Matrixeinheit abgebildet, die zwei Reihen zu je acht Matrixgefäßen (21) besitzt, Vorzugsweise sind die Matrixgefäße (21) aus der Matrixeinheit (20) entnehmbar, so daß sie getrennt gefertigt werden können. Jedem der Matrixgefäße ist ein Deckel (22) zugeordnet, mit dem die obere Öffnung des Matrixgefäßes (Zugabeöffnung) verschlossen werden kann. Die Matrixeinheit besitzt vorzugsweise weiterhin den Dorn (23), der sich ausgehend von der Platte (24) nach unten erstreckt. Außerdem sind in der Platte (24) Ausnehmungen (25. 25a) angebracht. Dorn und Ausnehmungen dienen zur Positionierung der Matrixeinheit relativ zu der Auffangeinheit, wenn die Matrixeinheit auf diese Einheit aufgesetzt wird.

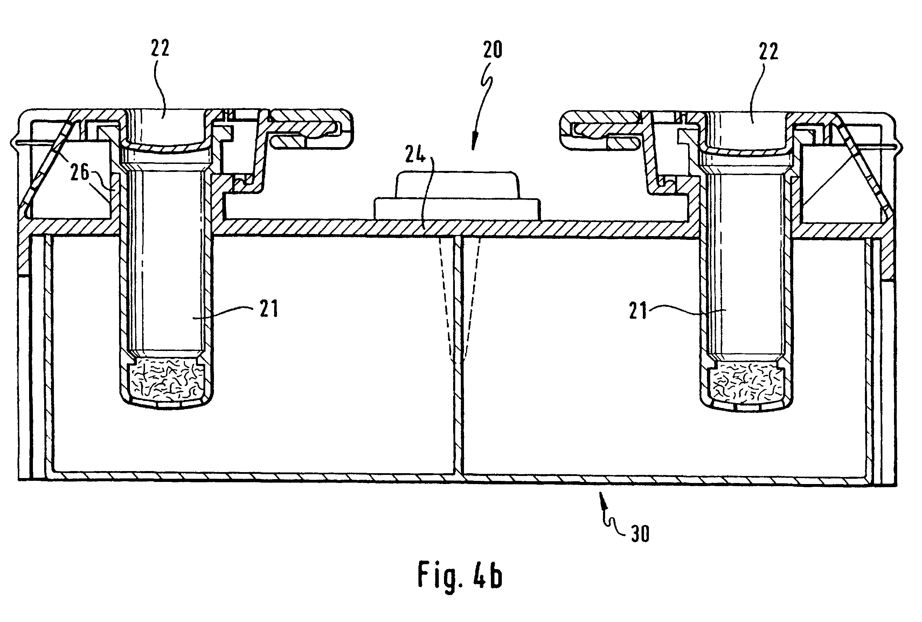

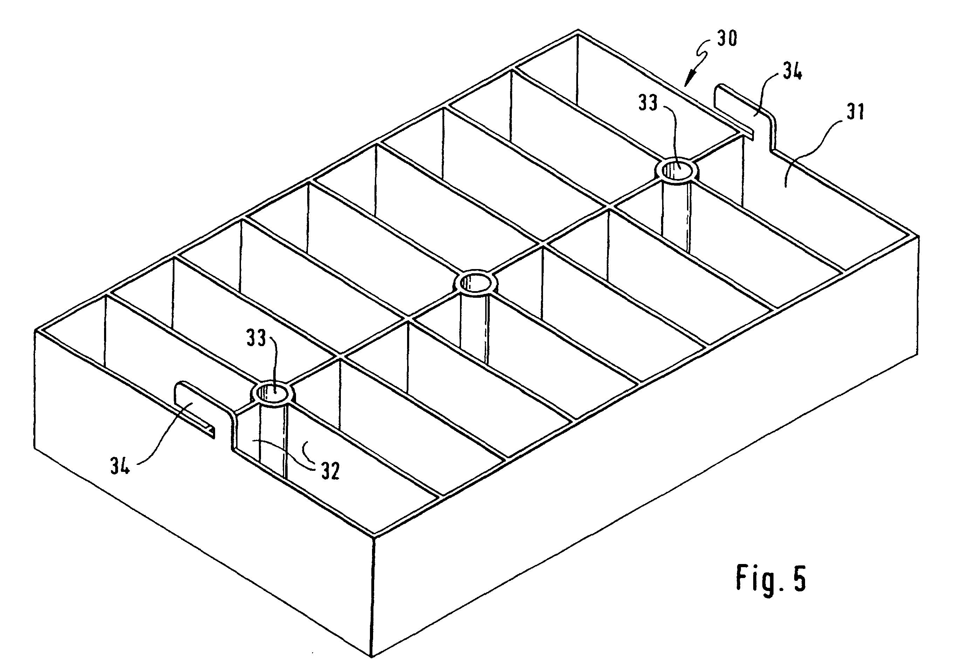

Figur 4b stellt einen Querschnitt durch die Figur 4a entlang der Linie B-B' dar. Außerdem zeigt Figur 4b eine Anordnung, bei der die Matrixeinheit über der Abfalleinheit (30) angeordnet ist. Die Abfalleinheit (30), die in der Figur 5 näher dargestellt ist, besitzt für jedes Matrixgefäß eine eigene Kammer, in die das Matrixgefäß hineinragt. Flüssigkeit, die aus dem Matrixgefäß durch die untere Öffnung (Auslaßöffnung) austritt, gelangt somit direkt in die entsprechende Kammer der Abfalleinheit. Die relative Positionierung von Matrixeinheit und Abfalleinheit erfolgt über Positionierungselemente. Vorteilhaft kann diese Positionierung durchgeführt werden, indem die Matrixeinheit die Abfalleinheit mit ihren Standelementen umfaßt, wie dies z. B. bei einem Schachteldeckel der Fall ist.

Die Matrixgefäße sind bei der in Figur 4 dargestellten Ausführungsform in Ausnehmungen eingehängt. Diese Ausnehmungen befinden sich in von der Platte (24) ausgehend hochgezogenen Haltern (26). Die Matrixgefäße (21) besitzen im Bereich ihrer Zugabeöffnung eine Verbreiterung, die auf dem Rand der Halterung (26) aufliegt.

Matrixgefäße, die zur Verwendung in der vorliegenden Erfindung geeignet sind, besitzen im Bereich ihrer Auslaßöffnung ein spezifisch bindefähiges Material für die zu isolierenden biologischen Materialien. Die Materialien sind vorzugsweise porös, so daß sie von Flüssigkeit, die aus dem Matrixgefäß (21) austritt, durchströmt werden können. Geeignete Materialien sind in der EP-A-0 738 733 beschrieben. In der genannten europäischen Patentanmeldung sind außerdem geeignete Konstruktionen von Matrixgefäßen genannt.

In Figur 5 ist eine perspektivische Ansicht einer Abfalleinheit dargestellt. Die Abfalleinheit (30) besitzt zwei Reihen von je acht Kavitäten (31) zur Aufnahme von Abfallfluiden. Dic Kavitäten (31) sind durch Trennwände (32) voneinander getrennt, so daß sich die Abfallfluide nicht vermischen können. Die Abfalleinheit besitzt weiterhin die Röhren (33), die zur Aufnahme des Dorns (23) der Matrixeinheit (20) dienen. Da die Abfallfluide verworfen werden, ist die gegenseitige Orientierung von Matrixeinheit und Abfalleinheit unerheblich, so daß zwei Röhren (33) vorgesehen sind, um dem Benutzer die Handhabung zu erleichtern. Die Abfalleinheit kann weiterhin die Laschen (34) besitzen, die in die Ausnehmung (25, 25a) der Matrixeinheit eingreifen, wenn diese auf der Abfalleinheit angeordnet ist.

In der Figur 6 ist eine Auffangeinheit perspektivisch dargestellt. Die Auffangeinheit (40) besitzt zwei Reihen zu je acht Auffanggefäßen (41). Vorzugsweise ist die Auffangeinheit einteilig ausgeführt, d. h. die Auffanggefäße (41) und der Halter (42) bilden eine einteilige Einheit. Zur eindeutigen Positionierung der Matrixeinheit auf der Auffangeinheit, besitzt die Auffangeinheit eine Ausnehmung (43), in die der Dorn (23) der Matrixeinheit eingreift, wenn die Matrixeinheit auf der Auffangeinheit angeordnet ist. Durch das Zusammenwirken von Dom (23) und Ausnehmung (43) wird eine eindeutige Zuordnung der Matrixgefäße zu Auffanggefäßen erreicht. Die Auffangeinheit besitzt weiterhin Standelemente (44) zum Aufstellen auf eine Oberfläche sowie die Laschen (45), die in die Ausnehmungen (25, 25a) der Matrixeinheit eingreifen.

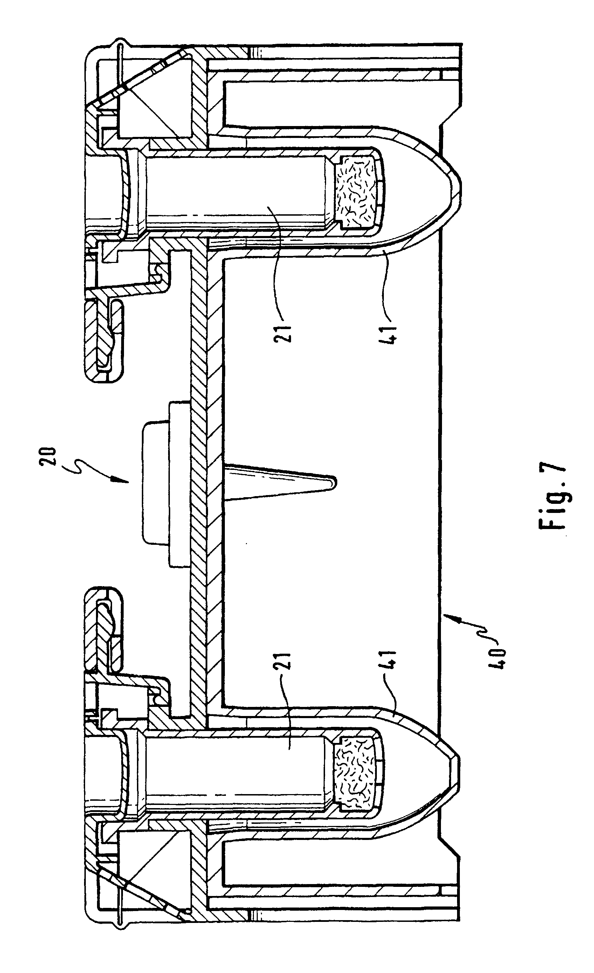

In der Figur 7 ist das Zusammenwirken von Matrixeinheit und Auffangeinheit näher dargestellt. Figur 7 stellt einen Querschnitt durch eine Anordnung aus Matrixeinheit und Auffangeinheit dar. Die Matrixeinheit (20) mit den darin hängenden Matrixgefäßen (21) ist derart auf der Auffangeinheit angeordnet, daß die Matrixgefäße (21) in die Auffanggefäße (41) hineinragen. Bei Elution von biologischen Materialien von den Matrices gelangt das Elutionsfluid daher direkt in die Auffanggefäße (41) hinein.

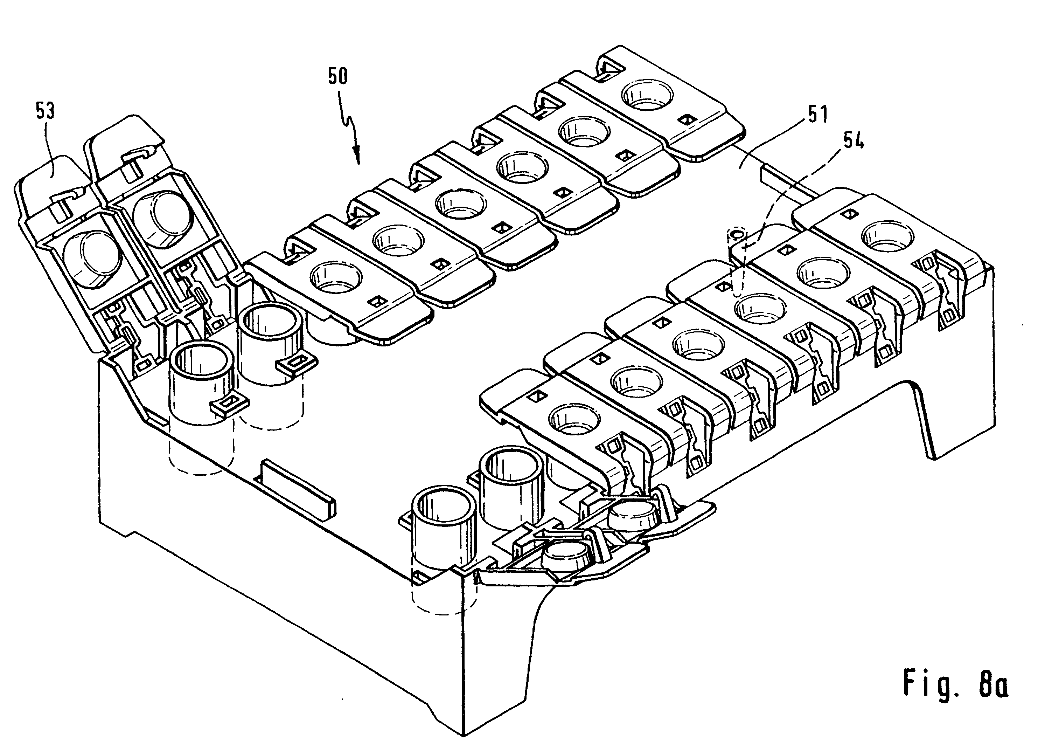

Nachdem die Elution erfolgt ist, wird die Matrixeinheit von der Auffangeinheit abgenommen und die Auffangeinheit kann mit der in Figur 8a dargestellten Verschlußeinheit verschlossen werden. Die Verschlußeinheit besitzt einen Halter (51), in dem in zwei Reihen jeweils acht Röhren angeordnet sind. Die Röhren besitzen sowohl einen Teil, der über den Halter nach oben herausragt, als auch einen Teil, der sich vom Halter ausgehend nach unten erstreckt. Die oberen Teile der Röhren (52) sind durch Deckel (53) verschlossen. Die Verschlußeinheit besitzt weiterhin einen Dorn (54), der eine eindeutige Orientierung der Verschlußeinheit relativ zur Auffangeinheit sicherstellt.

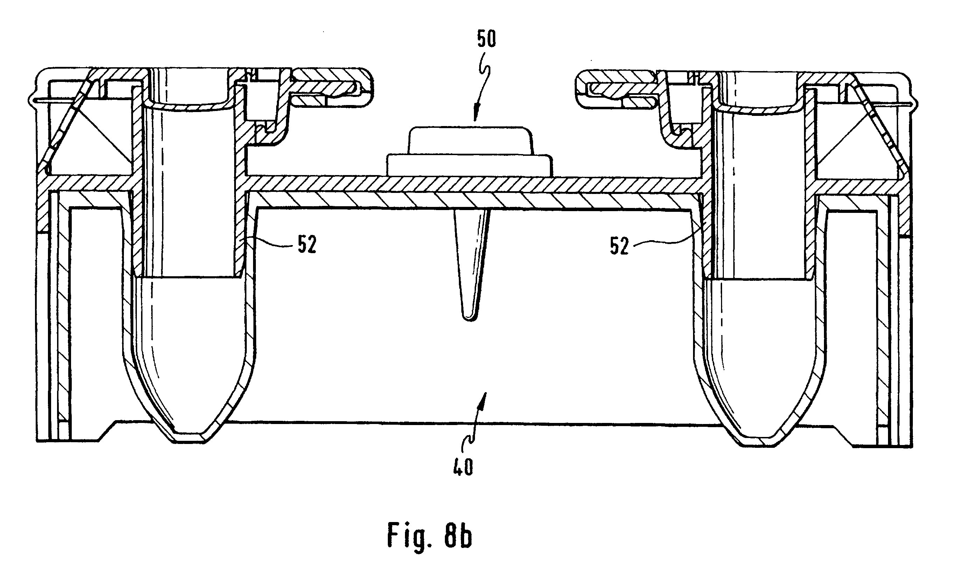

In der Figur 8b ist eine Anordnung aus Verschlußeinheit (50) und Auffangeinheit (40) dargestellt. In dieser Figur ist zu erkennen, daß sich die nach unten erstreckenden Teile der Anschlußröhren in die Auffanggefäße einpassen. Hierzu sind die unteren Enden der Anschlußröhrcn vorzugsweise angeschrägt, so daß ein Einpassen in die Öffnungen der Auffanggefäße erleichtert wird. Wenn die Verschlußeinheit auf der Auffangeinheit angeordnet ist, sind die Anschlußröhren flüssigkeitsdicht in die Auffanggefäße eingepaßt. Dies kann entweder durch einen Formsitz oder einen Preßsitz zwischen Auffanggefäß und Anschlußröhre erreicht werden. Neben der in Figur 8 dargestellten Ausführungsform, bei der die Anschlußröhre in das Auffanggefäß eingreift, ist auch eine Ausführungform möglich, bei der die Anschlußröhre die äußere Kontur des Auffanggefäßes umfaßt.

Die Figur 8 zeigt Anschlußröhren mit einem runden Querschnitt. Es sind jedoch außerdem davon abweichende Querschnitte, wie Ovale, Rechtecke und dergleichen möglich. Auffanggefäße und Anschlußröhren sind jedoch stets in ihrem Querschnitt aneinander angepaßt. so daß ein flüssigkeitsdichter Anschluß erreicht wird, wenn die Anschlußeinheit auf die Auffangeinheit aufgesetzt ist.

In der Figur 9 ist ein Verschlußtyp dargestellt, wie er vorteilhaft für die Aufschlußeinheit, Matrixeinheit und Verschlußeinheit verwendet werden kann. Der dargestellte Deckel ist für die bei einer Zurverfügungstellung von biologischen Materialien auftretenden Bedingungen besonders geeignet. Die Verschlußanordnung besitzt einen Deckel (71), der über ein Scharnier (72) (vorzugsweise Filmscharnier) an einem Gefäß oder einem Halter befestigt ist. Auf der Deckelplatte (73) befindet sich eine Vorwölbung (74), die zum Verschluß einer Öffnung dient. Die Vorwölbung besitzt vorzugsweise die Form eines Kegelstumpfes oder eines Kugelsegmentes. An der Deckelplatte (73) ist über ein oder mehrere Scharniere (78) (vorzugsweise Filmscharniere) eine Hakenplatte (75) befestigt. An dieser Hakenplatte befindet sich ein Haken (76), der in einer Öse verhakt werden kann. Zur besseren Handhabung weist die Hakenplatte (75) eine Handhabungslasche (77) auf. Durch die beschriebenen Scharniere (72 und 78) besitzt die Verschlußanordnung zwei Teile, die gegenüber einem Gefäß oder einer Halterung bewegt werden können. Die Verschlußanordnung besitzt weiterhin einen flexiblen Teil (79). der an der Deckelplatte (73) und einem Halterbereich (80) befestigt ist. Beim Verschwenken des Deckels aus der in Figur 9a dargestellten, geöffneten Position in eine geschlossen Position durchläuft der Deckel eine Position, in der der flexible Teil gedehnt wird und sich beim weiteren Verschwnken zumindest teilweise wieder entspannt. Aufgrund der Dehnung des flexiblen Teils, die an einem Totpunkt maximal ist, verschwenkt der Deckel entweder in eine geöffnete Position oder in eine Position, in der er mit der Vorwölbung (74) auf dem Rand (81) aufliegt. In dieser Position ist die Öffnung noch nicht fllüssigkeitsdicht verschlossen, aber ein Kontaminationsrisiko ist stark abgesenkt. Aus der Position, bei der der Deckel an der Öffnung anliegt, kann ohne größeren Kraftaufwand eine erneute Öffnung stattfinden oder aber die Verschlußanordnung kann vollständig verschlossen werden. Zum vollständigen Verschließen des Deckels kann der Haken (76) durch Verschwenken der Hakenplatte (75) in die Öse (82) eingehakt werden. Statt der Öse kann auch ein Vorsprung am Gefäß vorgesehen werden, unter den der Haken eingehakt wird.

In der eingehakten Position besteht ein Zug auf die Deckelplatte (73), der die Vorwölbung (74) in die Öffnung des Gefäßes hineindrückt und somit gas- und flüssigkeitsdicht verschließt. Wird bei eingehaktem Deckel in dem Gefäß eine Flüssigkeit erwärmt, so erhöht sich der Gefäßinnendruck. Ein Aufspringen des Deckels durch den Innendruck wird durch den Hakenverschluß jedoch effizient vermieden. Diese Eigenschaft der beschriebenen Verschlußanordnung ist von besonderer Bedeutung für den Aufschluß bzw. die Lyse von Probeflüssigkeiten, bei denen eine Erwärmung vorgenommen wird. Weiterhin kann die Verschlußanordnung für Gefäße zum Thermocycling verwendet werden, bei denen ebenfalls mit erhöhter Temperatur gearbeitet wird.

Das Volumen der Kavitäten der Abfalleinheit wird vorzugsweise so bemessen, daß neben der Aufschlußmischung noch die Waschflüssigkeiten aufgenommen werden können, ohne daß der Flüssigkeitspegel die Auslaßöffnung der Matrixgefäße berührt.

Wird für die Vorwölbung (74) die Form eines Kegelstumpfes oder eines Kugelausschnittes gewählt und die Vorwölbung aus flexiblem Material gefertigt, so bewirkt eine Erhöhung des Gefäßinnendruckes eine Deformation der Vorwölbung in der Weise, daß die Dichtung zwischen Vorwölbung und Gefäßrand erhöht wird.

Ein Öffnen des verhakten Verschlusses erfolgt durch Verkippen der Hakenplatte (75) gegen die Deckelplatte (73). Durch die Ausgestaltung des Deckels mit zwei gegeneinander verschwenkbaren Platten wird eine Verschlußanordnung zur Verfügung gestellt, die auf einfache Weise und mit geringem Aufwand verschlossen und geöffnet werden kann und die die Dichtigkeit eines Gefäßes auch bei erhöhtem Innendruck sicherstellt.

### Bezugszeichenliste

- (1): Probe
- (2): Pipette
- (10): Aufschlußeinheit
- (11): Aufschlußgefäß
- (12): Deckel der Aufschlußeinheit
- (13): Schiene
- (14): Dorn
- (15): Platte
- (20): Matrixeinheit
- (21): Matrixgefäß
- (22): Deckel der Matrixeinheit
- (23): Dorn
- (24): Platte
- (25, 25a): Ausnehmung
- (26): Halter
- (30): Abfalleinheit
- (31): Kavität
- (32): Trennwand
- (33): Röhre
- (34): Lasche
- (40): Auffangeinheit
- (41): Auffanggefäß
- (42): Halter
- (43): Ausnehmung
- (44): Standelement
- (45): Lasche
- (50): Verschlußeinheit
- (51): Halter
- (52): Anschlußröhre
- (53): Deckel der Verschlußeinheit
- (54): Dorn
- (60): Koordinierungseinheit
- (70): Verschlußanordnung
- (71): Deckel
- (72): Scharnier
- (73): Deckelplatte
- (74): Vorwölbung
- (75): Hakenplatte
- (76): Haken
- (77): Handhabungslasche
- (78): Scharnier
- (79): flexibler Teil
- (80): Haltebereich
- (81): Rand
- (82): Öse

## Patentansprüche

1. Verfahren zur Gewinnung eines gereinigten biologischen Materials mit den folgenden Schritten:
a) Einbringen von biologischen Materialien in voneinander getrennte Aufschlußgefäße einer Aufschlußeinheit, die zwei oder mehr Aufschlußgefäße in einer vorgegebenen geometrischen Anordnung beinhaltet,
b) Zugabe von Aufschlußflüssigkeiten zu den biologischen Materialien in die Aufschlußgefäße,
c) Transfer der in den Aufschlußgefäßen befindlichen Flüssigkeiten in eine Matrixeinheit mit einer der Zahl der Aufschlußgefäße entsprechenden Zahl von Matrixgefäßen mit Auslaßöffnungen, wobei sich in jedem der Matrixgefäße eine Matrix befindet, an die das zu reinigende biologische Material bindet,
d) Entziehen der in den Matrixgefäßen befindlichen Flüssigkeiten durch die Auslaßöffnungen, wobei die Matrices von den Flüssigkeiten durchströmt werden,
e) Aufsetzen der Matrixeinheit auf eine Auffangeinheit mit Auffanggefäßen, die so angeordnet sind, daß zumindest die Auslaßöffnugnen der Matrixgefäße in die Auffanggefäße hineinragen,
f) Füllen der Matrixgefäße mit Elutionsfluid,
g) Entziehen der Elutionsfluide aus den Matrixgefäßen durch deren Auslaßöffnungen, wobei die Matrices von den Elutionsfluiden durchströmt werden und die mit biologischem Material angereicherten Elutionsfluide in den Auffanggefäßen aufgefangen werden
h) Entfernen der Matrixeinheit von der Auffangeinheit,
i) Verschließen der Auffangeinheit mit einer Verschlußeinheit.

2. Verfahren gemäß Anspruch 1, bei dem das Entziehen der in den Matrixgefäßen befindlichen Flüssigkeiten durch Zentrifugation erfolgt.

3. Verfahren gemäß Anspruch 1, bei dem die Zugabe von biologischen Materialien in die Aufschlußgefäße erfolgt, indem nur das Aufschlußgefäß geöffnet ist, in das die Zugabe erfolgt und die übrigen zur Aufschlußeinheit gehörenden Aufschlußgefäße angelehnt oder geschlossen sind.

4. Verfahren gemäß Anspruch 1, bei dem sich die Deckel der Matrixeinheit vor Zugabe der Aufschlußflüssigkeiten in der Anlehnposition befinden, zur Zugabe ein Deckel geöffnet und nach der Zugabe in die Schließstellung gebracht wird.

5. Verfahren gemäß Anspruch 1 mit den Schritten:
a) Abspeichern von Daten, die eine biologische Probe kennzeichnen,
b) Zuordnung der die biologische Probe betreffenden Daten zur Daten, die sowohl die Aufschlußeinheit, als auch die Position des Aufschlußgefäßes innerhalb der Aufschlußeinheit kennzeichnen, in die die Probe gegeben wird,
c) Zuordnen von Daten, die die Matrixeinheit kennzeichnen, in die die Aufschlußflüssigkeiten gegeben werden zu Daten, die die Aufschlußeinheit kennzeichnen,
d) Zuordnen von Daten, die entweder
- die Auffangeinheit kennzeichnen, in der Elutionsfluid aus der Matrixeinheit aufgefangen wird oder
- die die Verschlußeinheit kennzeichnen, mit der die Auffangeinheit verschlossen wird
zu den Daten der Matrixeinheit.

6. Verfahren gemäß Anspruch 5, bei dem der Transfer von Fluiden aus der Aufschlußeinheit in die Matrixeinheit in der Weise erfolgt, daß Flüssigkeit aus einem Aufschlußgefäß entnommen und in das von seiner Position korrespondierende Matrixgefäß der Matrixeinheit gegeben wird.

7. System zum Zurverfügungstellen biologischer Materialien, beinhaltend
a) eine Auffangeinheit (40) zum Auffangen des biologischen Materials mit zwei oder mehr Auffangbehältern (41), von denen jeder eine von oben zugängliche Öffnung besitzt,
b) eine Matrixeinheit (20) mit einem Halter, in dem Matrixbehälter angeordnet sind, die eine Zugabeöffnung zur Zugabe eines Fluids sowie eine Auslaßöffnung zur Abgabe von Fluid haben und die Matrixbehälter so angeordnet sind, daß sie zumindest mit ihren Auslaßöffnungen in die Auffangbehälter hineinragen, wenn die Matrixeinheit auf die Auffangeinheit aufgesetzt ist,
c) eine Verschlußeinheit (50), die auf die Auffangeinheit aufgesetzt wird, und die eine der Zahl der Auffangbehälter entsprechende Zahl von Anschlußröhren besitzt, die eine Anschlußöffnung sowie eine mit einem Deckel verschlossene Entnahmeöffnung aufweisen und die Anschlußröhren mit ihren Anschlußöffnungen flüssigkeitsdicht an die Auffangbehälter angeschlossen werden, wenn die Verschlußeinheit auf die Auffangeinheit aufgesetzt ist.

8. System gemäß Anspruch 7 mit einer Schiene, die zwei oder mehr Deckel miteinander koppelt, so daß ein Öffnen der miteinander gekoppelten Deckel in einem Arbeitsschritt möglich ist.

9. System gemäß Anspruch 7, das weiterhin eine Aufschlußeinheit (10) umfaßt.

10. System gemäß Anspruch 7, das weiterhin eine Abfalleinheit (30) umfaßt.

11. System gemäß Anspruch 7, das weiterhin eine Koordinationseinheit besitzt.

12. System gemäß Anspruch 7, bei dem die Matrixbehälter entnehmbar in dem Halter angeordnet sind.

13. System gemäß Anspruch 7, bei dem Matrixeinheit und Auffangeinheit derart aneinander angepaßt sind, daß die Auslaßöffnungen der Matrixgefäße in die Auffanggefäße hineinragen wenn die Matrixeinheit auf der Auffangeinheit angeordnet ist.

14. System gemäß Anspruch 7, **dadurch gekennzeichnet, daß** an der Matrixeinheit eine der Zahl der Matrixbehältnisse entsprechende Zahl von Deckeln angebracht sind, die zum Verschluß der Zugabeöffnungen der Matrixbehältnisse dienen.

15. System gemäß Anspruch 14, bei dem zwei oder mehr der Deckel über eine Schiene miteinander verbunden sind, so daß die verbundenen Deckel in einem Handhabungsschritt gemeinsam geöffnet oder geschlossen werden können.

16. Verschlußanordnung, insbesondere für ein System gemäß Anspruch 7, beinhaltend
- einen Klappdeckel (71), der eine Öffnung verschließt, wobei
- der Klappdeckel eine Deckelplatte (73) besitzt, die über ein Scharnier (72) an einem Gefäß oder einen Haltebereich (80) befestigt ist und sich an der Deckelplatte eine Ausbuchtung (74) befindet, die zum Verschluß der Öffnung dient,
- an der Deckelplatte über ein Scharnier (78) eine Hakenplatte (75) befestigt ist, an der sich ein Haken (76) befindet und
- an dem Gefäß oder dem Haltebereich ein Vorsprung befestigt ist, unter den der Haken eingehakt werden kann.

17. Verschlußanordnung gemäß Anspruch 16, bei der der Vorsprung die Form einer Öse (82) besitzt, in die der Haken eingehakt wird.

18. Verschlußanordnung gemäß Anspruch 16, bei der die Ausbuchtung an der Deckelplatte die Form eines Kegelstumpfes oder eines Kugelsegmentes besitzt.

19. Verschlußanordnung gemäß Anspruch 16, bei der Deckelplatte und Gefäß oder Haltebereich über ein flexibles Element (79) miteinander verbunden sind, das beim Zuklappen des Deckels bis zu einem Totpunkt gedehnt wird und sich beim weiteren Verschwenken zumindest teilweise entspannt.

20. Verschlußanordnung gemäß Anspruch 16 oder 18, bei der die Ausbuchtung aus einem zumindest teilweise flexiblen Material besteht, so daß bei geschlossenem Deckel ein im Gefäß herrschender Druck eine Deformation der Ausbuchtung bewirkt, die zu einer Verbesserung der Abdichtung zwischen Ausbuchtung und Gefäßrand führt.

## Claims

1. Process for isolating a purified biological material comprising the following steps:
a) Placing biological materials in separate lysis vessels of a lysis unit comprising two or several lysis vessels in a predetermined geometric arrangement,
b) adding lysis liquids to the biological materials in the lysis vessels,
c) transferring the liquids in the lysis vessels into a matrix unit containing matrix vessels with outlet openings whose number corresponds to the number of lysis vessels and a matrix is located in each of the matrix vessels to which the biological material to be purified binds,
d) extracting the liquids in the matrix vessels through the outlet openings during which the liquids flow through the matrices,
e) placing the matrix unit on a collecting unit with collecting vessels which are arranged such that at least the outlet openings of the matrix vessels extend into the collecting vessels,
f) filling the matrix vessels with elution fluid,
g) extracting the elution fluids from the matrix vessels through their outlet openings during which the elution fluids flow through the matrices and the elution fluids which are enriched with biological material are collected in the collecting vessels,
h) removing the matrix unit from the collecting unit,
i) closing the collecting unit with a closure unit.

2. Process as claimed in claim 1, in which the liquids in the matrix vessels are extracted by centrifugation.

3. Process as claimed in claim 1, wherein biological materials are added to the lysis vessels by only opening the lysis vessel into which material is to be added and the other lysis vessels of the lysis unit are leaned to or closed.

4. Process as claimed in claim 1, wherein the caps of the matrix unit are in the leaned-to position before addition of the lysis liquids, a cap is opened for the addition and is brought into the closed position after the addition.

5. Process as claimed in claim 1 comprising the steps:
a) storing data which identify a biological sample,
b) allocating the data relating to the biological sample to data which identify the lysis unit as well as the position of the lysis vessel within the lysis unit into which the sample is added,
c) allocating data which identify the matrix unit into which the lysis liquids are added to data which identify the lysis unit,
d) allocating data which either
- identify the collecting unit in which the elution liquid from the matrix unit is collected or
- which identify the closure unit used to close the collecting unit
to the data for the matrix unit.

6. Process as claimed in claim 5, in which liquids are transferred from the lysis unit into the matrix unit by removing liquid from a lysis vessel and adding it to the matrix vessel of the matrix unit that is in a corresponding position.

7. System for providing biological materials comprising
a) a collecting unit (40) for collecting the biological material which has two or several collecting vessels (41) each of which has an opening which is accessible from above,
b) a matrix unit (20) with a holder in which the matrix vessels are located which have an inlet opening for adding a fluid as well as an outlet opening for discharging fluid and the matrix vessels are arranged such that at least their outlet openings extend into the collecting vessels when the matrix unit is placed on the collecting unit,
c) a closure unit (50) which is placed on the collecting unit and which has a number of connecting tubes which corresponds to the number of collecting vessels and these tubes have a connecting opening and a discharge opening closed with a cap and the connecting tubes with their connecting openings are attached to the collecting vessels in a water-tight manner when the closure unit is placed on the collecting unit.

8. System as claimed in claim 7 with a rail which couples two or more caps together so that the coupled caps can be opened in one operating step.

9. System as claimed in claim 7, which additionally includes a lysis unit (10).

10. System as claimed in claim 7, which additionally includes a waste unit (39).

11. System as claimed in claim 7, which additionally has a coordination unit.

12. System as claimed in claim 7, wherein the matrix container arranged in the holder can be removed.

13. System as claimed in claim 7, wherein the matrix unit and collecting unit are matched in such a way that the outlet openings of the matrix vessels extend into the collecting vessels when the matrix unit is placed on the collecting unit.

14. System as claimed in claim 7, wherein caps whose number corresponds to the number of matrix containers are attached to the matrix unit and are used to close the application openings of the matrix containers.

15. System as claimed in claim 14, wherein two or more of the caps are connected by a rail so that the connected caps can be opened or closed together in one handling step.

16. Vessel having a closure arrangement especially for a system as claimed in claim 7 comprising
- a hinged cap (71) which closes an opening, wherein
- the hinged cap has a cap plate (73) which is attached via a hinge (72) to a vessel or a holding region (80) and a bulge(74) is located on the cap plate which is used to seal the opening,
- a hook plate (75) on which a hook (76) is located is attached to the cap plate via a hinge (78) and
- a projection is attached to the vessel or the holding region under which the hook can be hooked.

17. Vessel having a closure arrangement as claimed in claim 16, wherein the projection has the shape of an eyelet (82) into which the hook can be hooked.

18. Vessel having a closure arrangement as claimed in claim 16, in which the bulge on the cap plate has the shape of a truncated cone or a spherical segment.

19. Vessel having a closure arrangement as claimed in claim 16, wherein the cap plate and vessel or holding region are connected together via a flexible element(79) which is stretched up to a dead point when the cap is lowered and at least partially relaxes when it is swung further.

20. Vessel having a closure arrangement as claimed in claim 16 or 18, wherein the bulge is composed of an at least partially flexible material such that when the cap is closed a pressure in the vessel causes a deformation of the bulge which improves the seal between the bulge and vessel rim.

## Revendications

1. Procédé d'extraction d'une matière biologique épurée avec les étapes suivantes :
a) Apport de matières biologiques dans des récipients de digestion séparés, d'une unité de digestion, qui contient deux ou plusieurs récipients de digestion selon une configuration géométrique prédéterminée,
b) addition de liquides de digestion aux matières biologiques dans les récipients de digestion,
c) transfert des liquides se trouvant dans les récipients de digestion dans une unité de matrice ayant un nombre de récipients de matrice correspondant au nombre des récipients de digestion, avec des ouvertures de sortie, une matrice à laquelle se lie la matière biologique à épurer se trouvant dans chacun des récipients de matrice,
d) évacuation des liquides se trouvant dans les récipients de matrice par les ouvertures de sortie, les matrices étant traversées par des liquides,
e) pose de l'unité de matrice sur une unité réceptrice avec des récipients récepteurs qui sont disposés de sorte que, au moins les ouvertures de sortie des récipients de matrice entre dans les récipients récepteurs,
f) remplissage des récipients de matrice avec un fluide d'élution,
g) évacuation des fluides d'élution à partir des récipients de matrice par leurs ouvertures de sortie, les matrices étant traversées par les fluides d'élution et les fluides d'élution enrichis en matière biologique sont reçus dans les récipients récepteurs,
h) retrait de l'unité de matrice de l'unité réceptrice,
i) fermeture de l'unité réceptrice par une unité de fermeture.

2. Procédé selon la revendication 1, dans lequel le retrait des liquides se trouvant dans les récipients de matrice, a lieu par centrifugation.

3. Procédé selon la revendication 1, dans lequel l'addition de matières biologiques a lieu dans les récipients de digestion, alors que seulement le récipient de digestion dans lequel a lieu l'addition est ouvert, et les récipients de digestion restants appartenant à l'unité de digestion sont entrouverts ou fermés.

4. Procédé selon la revendication 1, dans lequel les couvercles de l'unité de matrice se trouvent dans la position entrouverte avant l'addition des liquides de digestion, un couvercle est ouvert pour l'addition et il est amené dans la position de fermeture après l'addition.

5. Procédé selon la revendication 1, avec les étapes :
a) Mémorisation des données, qui caractérisent un échantillon biologique,
b) association des données concernant l'échantillon biologique aux données, qui caractérisent aussi bien l'unité de digestion que la position du récipient de digestion à l'intérieur de l'unité de digestion dans laquelle est ajouté l'échantillon,
c) association de données qui caractérisent l'unité de matrice, dans laquelle sont ajoutés les liquides de digestion, aux données qui caractérisent l'unité de digestion;
d) association de données, qui soit
- caractérisent l'unité réceptrice, dans laquelle est reçu le fluide d'élution issu de l'unité de matrice soit
- qui caractérisent l'unité de fermeture, avec laquelle l'unité réceptrice est fermée,
aux données de l'unité de matrice.

6. Procédé selon la revendication 5, dans lequel le transfert de fluides issus de l'unité de digestion, dans l'unité de matrice a lieu d'une façon telle que du liquide issu d'un récipient de digestion est prélevé et ajouté dans le récipient de matrice de l'unité à matrice, correspondant à sa position.

7. Système de mise à disposition de matières biologiques, contenant
a) une unité réceptrice (40) pour recevoir la matière biologique avec deux ou plusieurs récipients récepteurs (41), parmi lesquels chacun possède une ouverture accessible depuis le haut,
b) une unité à matrice (20) avec un support, dans lequel sont disposés des récipients de matrice, qui possèdent une ouverture d'addition pour ajouter un fluide ainsi qu'une ouverture de sortie pour évacuer un fluide et les récipients de matrice sont disposés de telle sorte qu'ils font saillie au moins avec leurs ouvertures de sortie dans les récipients récepteurs, lorsque l'unité à matrice est posée sur l'unité réceptrice,
c) une unité de fermeture (50), qui est posée sur l'unité réceptrice, et qui possède un nombre de tubes de raccordement correspondant au nombre des récipients récepteurs, lesquels tubes présentent une ouverture de raccordement ainsi qu'une ouverture pour prélèvement, fermée par un couvercle et les tubes de raccordement sont raccordés d'une manière étanche aux liquides, aux récipients récepteurs par leurs ouvertures de raccordement, lorsque l'unité de fermeture est posée sur l'unité réceptrice.

8. Système selon la revendication 7 avec un rail, qui couple deux ou plusieurs couvercles ensemble, de sorte qu'une ouverture des couvercles couplés ensemble est possible en une seule étape opérationnelle.

9. Système selon la revendication 7, qui comprend de plus une unité de digestion (10).

10. Système selon la revendication 7, qui comprend de plus une unité pour déchets (30).

11. Système selon la revendication 7, qui possède de plus une unité de coordination.

12. Système selon la revendication 7, dans lequel les récipients de matrice sont disposés dans le support d'une manière extractible.

13. Système selon la revendication 7, dans lequel unité à matrice et unité réceptrice sont adaptées l'une à l'autre de sorte que les ouvertures de sortie des récipients de matrice font saillie dans les récipients récepteurs lorsque l'unité à matrice est disposée sur l'unité réceptrice.

14. Système selon la revendication 7, **caractérisé en ce que**, un nombre de couvercles correspondant au nombre des récipients de matrice sont appliqués sur l'unité à matrice, qui servent à fermer les ouvertures d'addition des récipients de matrice.

15. Système selon la revendication 14, dans lequel deux ou plusieurs des couvercles sont liés ensemble par un rail, de sorte à pouvoir ouvrir ou fermer ensemble les couvercles liés en une seule étape de manipulation.

16. Disposition de fermeture, en particulier pour un système selon la revendication 7, contenant
- un couvercle à charnière (71), qui referme une ouverture, dans laquelle
- le couvercle à charnière possède une plaque de couvercle (73), qui est fixée par une charnière (72) à un récipient ou à une section porteuse (80) et une projection (74) se trouve sur la plaque de couvercle, qui sert à fermer l'ouverture,
- une plaque à crochet (75) sur laquelle se trouve un crochet (76), est fixée à la plaque de couvercle par une charnière (78) et
- une partie saillante est fixée au récipient ou à la section porteuse, sous laquelle le crochet peut être accroché.

17. Disposition de fermeture selon la revendication 16, dans laquelle la partie saillante possède la forme d'un oeillet (82), dans lequel le crochet est accroché.

18. Disposition de fermeture selon la revendication 16, dans laquelle la projection sur la plaque de couvercle possède la forme d'une tronc de cône ou d'un segment sphérique.

19. Disposition de fermeture selon la revendication 16, dans laquelle une plaque de couvercle et un récipient ou une section porteuse sont liés ensemble par un élément souple (79), qui lors du rabattement du couvercle est étiré jusqu'à un point mort et qui se détend au moins en partie lors d'un autre pivotement.

20. Disposition de fermeture selon la revendication 16 ou 18, dans laquelle la projection est constituée d'une matière au moins partiellement souple de sorte que, pour un couvercle fermé, une pression régnante dans le récipient provoque une déformation de la projection qui conduit à une amélioration de l'étanchéité entre la projection et le bord de récipient.
